Europäisches Patentamt

European Patent Office

Office européen des brevets

(11) Publication number: **0 373 289 A1**

## EUROPEAN PATENT APPLICATION

(21) Application number: **89112454.7**

(22) Date of filing: **07.07.89**

(51) Int. Cl.5: **B65G 9/00, B61B 3/00, E01B 25/24**

The title of the invention has been amended (Guidelines for Examination in the EPO, A-III, 7.3).

(30) Priority: **20.10.88 GB 8824610**

(43) Date of publication of application:
**20.06.90 Bulletin 90/25**

(84) Designated Contracting States:
**AT BE CH DE ES FR GB GR IT LI LU NL SE**

(71) Applicant: **STOCKRAIL LIMITED**
**Frost Hill**
**Liversedge West Yorkshire, WF15 6AU(GB)**

(72) Inventor: **Duce, Edward**
**1 Kirkland Off Knowler Hill**
**Liversedge West Yorkshire(GB)**

(74) Representative: **Denmark, James**
**c/o Bailey, Walsh & Co. 5 York Place**
**Leeds LS1 2SD Yorkshire(GB)**

(54) **Trolley suspension system.**

(57) The invention provides a trolley system comprising trolleys (20) which run on rails (10). Each trolley (20) comprises rollers (54) for running on a top running surface (12) of the rail (10), and opposite the rollers (54) are guide wheels (34) which are spring (44) loaded towards the rollers (54). The wheels (34) are adapted to engage between the limbs (14,16) of an inverted U-section bar which forms the rail (10) in order to retain the trolley (20) on the rail (10), but can be retracted against spring (44) action to be moved clear of the limbs (14,16) of the rail (10) for removal of the trolley (20).

FIG.1

EP 0 373 289 A1

## Improvements Relating to Trolley Suspension Systems

This invention relates to trolley suspension systems being systems wherein trolleys run on rails for the support and transport of articles such as garments and garment parts. It is appreciated that the type of article which is transported by the trolley on the trolley support rail arrangement is not of material importance to the general scope of the invention, and although reference is made hereinafter mainly to garments and garment parts, as the invention is specifically directed to this field, it is not intended that the invention be limited to this application.

The trolleys of the trolley system to which the invention relates comprise running elements which run on the support rails of the trolley suspension system, and each trolley may comprise a single rolling element, for example for the suspension of a single article, or more usually the trolley will comprise at least two spaced rolling elements with a trolley frame interconnecting the elements, for the support of a plurality of articles.

Conventionally, a trolley suspension system comprises a trolley support frame being an elongated member at the ends of which are roller brackets, each bracket supporting a trolley wheel, typically a wheel known as a diablo wheel of which the periphery is waisted so as to define a diablo shape, and the diablo rollers simply run on a round section support rail. The diablo wheel may be in relatively rotatable parts. The trolleys may run on the support rail under power, or they may run under gravity, or they may be propelled by hand, and in any one system a combination of such propulsion arrangements may be used, but in any case the trolleys are required to run freely on the support rail for the transport of the articles between different operating locations.

The suspension brackets carrying the diablo rollers are designed such that the trolleys can simply be hooked onto and hooked off the support rail for replacement, repair, and for relocation of the trolleys on different rail portions within the system.

In the environment of a garment making or a garment storage factory, the trolleys are subjected to rough handling so much so that there is a tendency for the trolleys to jump from the rails, which is of course undesirable.

· Various designs have been produced to mitigate against such disadvantage, and one such arrangement is described in European Patent No. 0110196 wherein the suspension rail is designed in the form of a pair of spaced rails, and between the spaced rails a trolley having specially designed roller heads is fitted enabling the trolley to run on the rail in such a fashion as to make the jumping of the trolley from the rails highly unlikely.

An advantage of the arrangement described in said European Patent is that by virtue of the design of the twin rails and the trolley roller heads, the trolley can be provided with an arm which can be cantilevered outwardly from the plane of the suspension rails and can support a load in the form of suspended articles and the connection between the trolley roller heads and the suspension rail exercises a restraining couple to counteract the couple which exists as the result of the support of a load on the said arm when cantilevered outwardly.

Another system for holding trolleys to guide rails is disclosed in U.S. Patent No. 3,862,605. In that system the trolley has a top roller which runs on the top edge of a flat rail, and a smaller, spring loaded roller runs on the lower edge of the rail. The two rollers act as a clamp on opposite edges of the rail which has a constraining effect on the running of the trolley. Also, if the trolley is subjected to vibrations as it will be in use there can be a tendency for the lower roller to spring from the lower edge of the rail, which may lead to the trolley jumping from the rail.

The present invention is an alternative, and yet simpler, trolley and suspension rail arrangement which achieves the same objectives as the trolley suspension system described in said European Patent namely that the trolley cannot readily jump from the rail, and the connection between the trolley and rail is such as to enable the trolley to support a cantilevered or offset load.

According to the present invention, the trolley suspension system comprises a suspension rail defining a running surface on which a trolley wheel can run, and having spaced restraining surfaces extending in the direction of the rail, and a trolley comprising at least one trolley wheel for running on said running surface, and stabilizing wheel means arranged in a use position to be rotatable about axis means lying parallel to said restraining surfaces for engagement therewith to stabilize the trolley in the event that it is loaded laterally of the rail in either direction and to prevent the trolley from being removable from the rail, the trolley wheel and stabilizing wheel means being relatively displaceable away from each other from the use position and against spring action to enable the removal of the trolley from the rail.

By such arrangement, certain advantageous results are achieved. When the trolley is in operative engagement with the rail, by virtue of the restraining surfaces and stabilizing wheel means, the trolley can support lateral or cantilevered loads. Also, the trolley cannot jump from the rail as in the use position the trolley roller wheel engages the running surface, and the stabilizing wheel means are opposite the said restraining surfaces.

In a particularly simple and advantageous arrangement, the guide rail is of inverted U-section, and the running surface is formed by the outer top surface of the U-section, whilst the space between the limbs forms a groove and the inner opposite surfaces of the groove define the restraining surfaces. The limbs of the U-section are preferably of equal length.

The trolley preferably comprises a pair of spaced trolley wheels connected to suspension brackets, the brackets being interconnected by a trolley frame, bar or other means, and under each trolley wheel and slidably supported by the frame or bar is a stabilizing roller (forming said wheel means) located with its axis at right angles to the axis of the trolley wheel, the trolley wheels and stabilizing rollers being spring loaded towards the trolley wheels so that to connect the trolley to or disconnect it from the rail, the stabilizing rollers are displaced against the springs until they are sufficiently spaced from the trolley wheels and either the trolley is positioned so that the stabilizing wheels lie under said space between the limbs and the stabilizing rollers released so that they enter said space or the trolley is simply removed from the rail.

When the trolley is in operative position on the rail, the trolley rollers, typically diablo rollers will engage the top surface of the rail whilst the stabilizing rollers will be located between the limbs, making it almost impossible for the trolley to leave the rail during normal use, and providing that the trolley can if desired support lateral or cantilevered loads which may be offset to either side of the plane of the trolley and the rail.

Such an arrangement can be power driven, hand driven and/or gravity driven as required and such an arrangement lends itself to simple switching devices enabling the trolley to be diverted from one section of suspension rail to another.

Also, the system can withstand rough handling, which is experienced in warehousing and production environments, without the trolley jumping from the rail.

The invention can take other embodiments; for example, the diablo wheels can be spring loaded and instead of using a single stabilizing wheel engaging in a groove, twin wheels engaging opposite sides of a guide rib or bar may be utilized.

An embodiment of the invention will now be described, by way of example, with reference to the accompanying drawings, wherein:-

Fig. 1 is a perspective view of a portion of a guide rail of a suspension system and showing a trolley according to the embodiment of the invention;

Fig. 2 is a sectional elevation taken through one of the brackets of the trolley shown in Fig. 1; and

Fig. 3 is a side view of the brackets shown in Fig. 2.

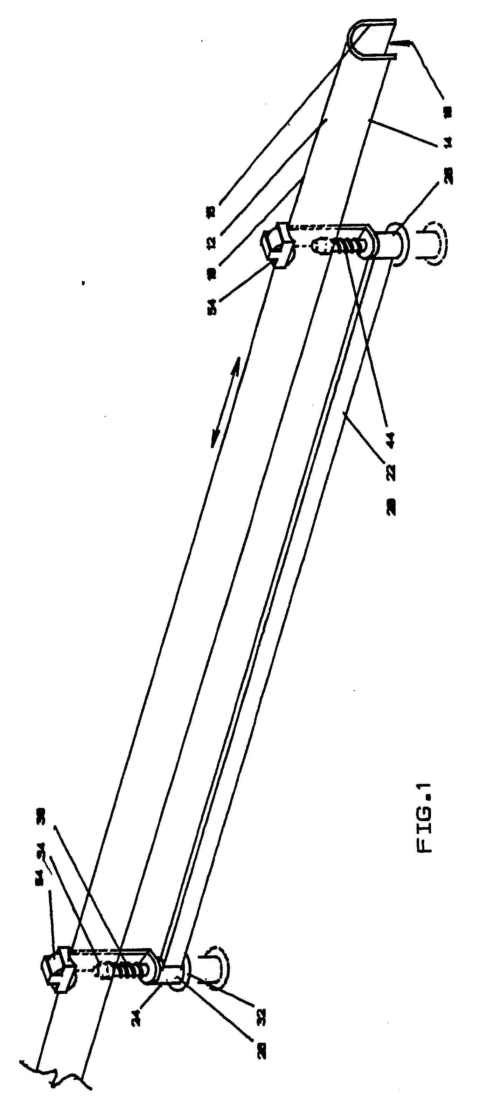

Referring to the drawings, a trolley suspension system comprises a guide rail 10 which as shown is of inverted U- shape having a curved top surface 12 and spaced side legs 14 and 16 which open downwardly as shown at 18. The guide rail serves to support one or more trolleys each as shown in Fig. 1, the trolley being indicated generally by reference 20.

The trolley comprises a support bar 22 on which garments or the like may be suspended, or the trolley may be provided with a cantilever support bar which may be located under the support bar 22, and may be adapted to be swung to a cantilevered position in relation to the bar 22 and the rail 10. It will be noticed that bar 22 is parallel to rail 10. The cantilever bar in the stored position will lie parallel to the bar 22 and will have its free end clipped to the adjacent end of the trolley, but when the cantilever bar is in the cantilevered position, the hangers or garments supported thereon can be slid off the end of the cantilever bar. A cantilever bar structure is illustrated in our copending Application 8821667.6.

At each end, the bar 22 is connected to a bracket 24, 26, the brackets 24 and 26 being identical. Each bracket 24 comprises a lower boss portion 28 in which is slidably contained a rod 30. At the lower end the rod 30 is provided with a disc or button 32 for the displacement of the rod 30 in a manner to be explained, whilst the upper end of the rod is provided a stabilizing roller 34, preferably of a resilient material, and constructed so as to have a cylindrical portion 36 and a top frusto conical portion 38. The roller 34 is maintained in position at the top of the rod 30 by being seated upon a washer 40 at its underside, and abutting against a restraining cap 42 which is connected to the rod 30. A spring 44 acts between the washer 34 and the bracket 24 to maintain the rod 30 in an upwards position, but permitting the rod 30 and the roller 34 to be displaced downwardly against spring action as indicated by the arrow 46 by pulling on the button 32.

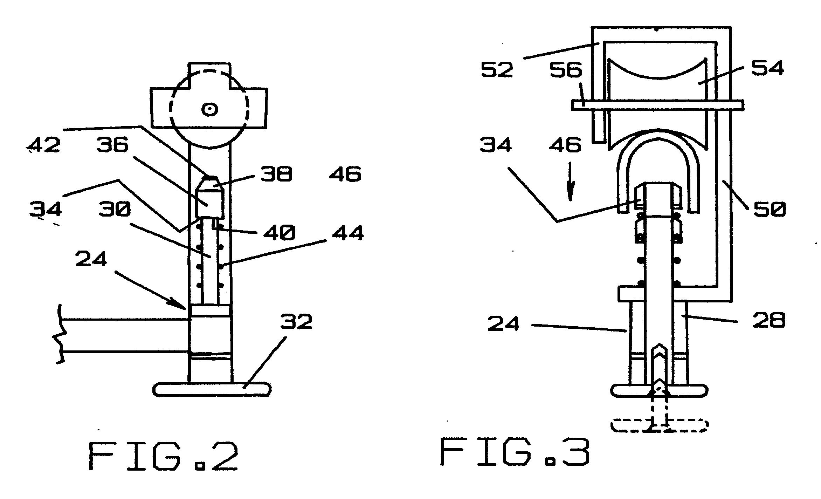

Bracket 24 is provided with a strap portion 50 which extends upwardly from the bush portion 28, and at the top the strap portion 50 is provided with a hook cradle 52 of the construction shown, and located within the hook cradle 52 is a diablo trolley roller 54 being mounted for rotation about the horizontal shaft 56 supported by the hook cradle 52. Such a construction enables the rollers 54 as shown in Fig. 1 to run on the curved surface 12 of the guide rail 10 whilst the stabilizing rollers 34 also as shown in Fig. 1 and more clearly in Fig. 2 engage the space in the guide rail between the sides 14 and 16.

The function and operation of the trolley will be understood from the foregoing, but it should be mentioned that the rollers 34 in locating between the sides 14 and 16 provide stabilization for the trolley in that it cannot become detached from the rail 10 due to cantilever loading and indeed in order to remove the trolley it is necessary to displace the stabilizing rollers 34 in a downwards direction by pulling the buttons 32, as indicated in dotted lines in Fig. 1 until the rollers 30 are clear of the lower edges of the sides 14 and 16 of the guide rail, when the trolley can be readily unhooked from the rail 10. To reposition the trolley on the rail it is again a matter of displacing the rollers 34 downwardly against the action of the springs 44 so that the gap between the trolley rollers 54 and the stabilizing rollers 34 is wide enough to enable the trolley to be placed on the rail 10.

A simple and effective trolley mounting and stabilizing arrangement is therefore provided. It should be mentioned that it is not necessary that the trolley should have two brackets 24 and 26 but it may have a single trolley wheel 54 and stabilizing wheel 30 if required.

## Claims

1. A trolley suspension system comprising a suspension rail defining a running surface on which a trolley wheel can run, and having spaced restraining surfaces extending in the direction of the rail, and a trolley comprising at least one trolley wheel for running on said running surface, and stabilizing wheel means arranged in a use position to be rotatable about axis means lying parallel to said restraining surfaces for engagement therewith to stabilize the trolley in the event that it is loaded laterally of the rail in either direction and to prevent the trolley from being removable from the rail, the trolley wheel and stabilizing wheel means being relatively displaceable away from each other from the use position and against spring actfion to enable the removal of the trolley from the rail.

2. A suspension system according to Claim 1, wherein the guide rail is of inverted U-section, and the running surface is formed by the outer top surface of the U-section, whilst the space between the limbs forms a groove and the inner opposite surfaces of the groove define the restraining surfaces.

3. A trolley system according to Claim 2, wherein the limbs of the U-section are of equal length.

4. A trolley system according to Claim 2 or 3, wherein the trolley comprises a pair of spaced trolley wheels connected to suspension brackets, the brackets being interconnected by a trolley frame, bar or other means, and under each trolley wheel and slidably supported by the frame or bar is a stabilizing roller (forming said stabilizing wheel means) located with its axis at right angles to the axis of the trolley wheel, the trolley wheels and stabilizing rollers being spring loaded towards the trolley wheels so that to connect the trolley to or disconnect it from the rail, the stabilizing rollers are displaced against the springs until they are sufficiently spaced from the trolley wheels and either the trolley is positioned so that the stabilizing wheels lie under said space between the limbs and the stabilizing rollers released so that they enter said space or the trolley is simply removed from the rail.

FIG.1

EP 0 373 289 A1

42  36
34  30

38  46
40  44

24

32

FIG.2

52  56  54

34  46

50

24  28

FIG.3

EP 0 373 289 A1

## DOCUMENTS CONSIDERED TO BE RELEVANT

EP 89112454.7

| Category | Citation of document with indication, where appropriate, of relevant passages | Relevant to claim | CLASSIFICATION OF THE APPLICATION (Int. Cl.) 5 |
|---|---|---|---|
| D,Y | US - A - 3 862 605 (CACCIATORE) * Fig. 2 * | 1 | B 65 G 9/00 B 61 B 3/00 E 01 B 25/24 |
| Y | US - A - 3 039 403 (MC DONOUGH) * Fig. 11 * | 1 | |
| D,A | EP - A1 - 0 110 196 (STOCKRAIL) * Fig. 7 * | 1,4 | |
| A | DE - B2 - 2 163 803 (RATH) * Fig. 3 * | 1,4 | |
| A | DE - B - 1 286 965 (CHEREAU) * Fig. 3 * | 1-3 | |
| A | US - A - 3 965 823 (BARDOT) * Fig. 2 * | 1 | TECHNICAL FIELDS SEARCHED (Int. Cl.4) |
| A | US - A - 874 367 (MOORE) * Fig. 3 * | 1 | B 61 B B 65 G E 01 B |

The present search report has been drawn up for all claims

| Place of search | Date of completion of the search | Examiner |
|---|---|---|
| VIENNA | 29-12-1989 | BAUMGARTNER |